# EUROPEAN PATENT APPLICATION

(11) **EP 4 704 359 A1**
(43) Date of publication of application: **04.03.2026**
(21) Application number: 23936833.5
(22) Date of filing: 12.05.2023
(51) Int. Cl.: H04L 5/00

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: DU, Zhongda, Dongguan, Guangdong 523860 (CN)
(74) Representative: Taor, Simon Edward William
(86) International application number: PCT/CN2023/093847
(87) International publication number: WO 2024/234136

(57) **Abstract**

The present disclosure relates to a communication method and a communication device. The method includes the following. A first communication device receives a transmission configuration indicator (TCI) state activation command, where the TCI state activation command indicates one or more sets of TCI states. In the embodiments, TCI states can be flexibly activated via a TCI state activation command.

## Description

### TECHNICAL FIELD

The present disclosure relates to the field of communications, and more specifically, to a communication method and device.

### BACKGROUND

In the medium access control (MAC) specification, an MAC control element (MAC CE) can be used to activate transmission configuration indicator (TCI) states. Typically, unified TCI states activated by an MAC CE belongs to a single transmission and reception point (TRP) in a serving cell.

### SUMMARY

The embodiments of the present disclosure provide a communication method and device that can flexibly activate a transmission configuration indicator (TCI) state(s).

The embodiments of the present disclosure provide a communication method that includes the following. A first communication device receives a TCI state activation command, where the TCI state activation command indicates one or more sets of TCI states.

The embodiments of the present disclosure provide a communication method that includes the following. A second communication device sends a TCI state activation command, where the TCI state activation command indicates multiple sets of TCI states.

The embodiments of the present disclosure provide a first communication device. The first communication device includes a receiving unit configured to receive a TCI state activation command, where the TCI state activation command indicates one or more sets of TCI states.

The embodiments of the present disclosure provide a second communication device. The second communication device includes a sending unit configured to send a TCI state activation command, where the TCI state activation command indicates multiple sets of TCI states.

The embodiments of the present disclosure provide a first communication device. The first communication device includes a processor and a memory, where the memory is configured to store a computer program, and the processor is configured to call and run the computer program stored in the memory, to enable the first communication device to execute the above communication method.

The embodiments of the present disclosure provide a second communication device. The second communication device includes a processor and a memory, where the memory is configured to store a computer program, and the processor is configured to call and run the computer program stored in the memory, to enable the second communication device to execute the above communication method.

The embodiments of the present disclosure provide a chip for implementing the above communication method. Specifically, the chip includes a processor configured to call and run a computer program in a memory, to enable a device equipped with the chip to execute the above communication method.

The embodiments of the present disclosure provide a computer-readable storage medium storing a computer program. When the computer program is executed by a device, the device executes the above-mentioned communication method.

The embodiments of the present disclosure provide a computer program product including computer program instructions, where the computer program instructions enable a computer to execute the above-mentioned communication method.

The embodiments of the present disclosure provide a computer program which, when run on a computer, enables the computer to execute the above-mentioned communication method.

In the embodiments of the present disclosure, a TCI state(s) can be flexibly activated via the TCI state activation command.

### BRIEF DESCRIPTION OF THE DRAWINGS

FIG. 1 is a schematic diagram of an application scenario according to embodiments of the present disclosure.
FIG. 2 is a schematic diagram of a unified transmission configuration indicator (TCI) state.
FIG. 3 is a schematic flow chart of a communication method according to an embodiment of the present disclosure.
FIG. 4 is a schematic flow chart of a communication method according to another embodiment of the present disclosure.
FIG. 5 is a schematic block diagram of medium access control control element (MAC CE) format 1 according to embodiments of the present disclosure.
FIG. 6 is a schematic block diagram of MAC CE format 2 according to embodiments of the present disclosure.
FIG. 7 is a schematic block diagram of MAC CE format 3 according to embodiments of the present disclosure.
FIG. 8 is a schematic block diagram of MAC CE format 4 according to embodiments of the present disclosure.
FIG. 9 is a schematic block diagram of a first communication device according to an embodiment of the present disclosure.
FIG. 10 is a schematic block diagram of a second communication device according to an embodiment of the present disclosure.
FIG. 11 is a schematic block diagram of a communication device according to embodiments of the present disclosure.
FIG. 12 is a schematic block diagram of a chip according to embodiments of the present disclosure.
FIG. 13 is a schematic block diagram of a communication system according to embodiments of the present disclosure.

### DETAILED DESCRIPTION

The technical solutions in the embodiments of the present disclosure will be described below in conjunction with the accompanying drawings in the embodiments of the present disclosure.

The technical solutions of the embodiments of the present disclosure can be applied to various communication systems, such as: a global system of mobile communication (GSM) system, a code division multiple access (CDMA) system, a wideband code division multiple access (WCDMA) system, general packet radio service (GPRS), a long term evolution (LTE) system, an advanced long term evolution (LTE-A) system, a new radio (NR) system, an evolved system of the NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN), a wireless fidelity (WiFi) system, a fifth-generation (5G) communication system, a or other communication systems, etc.

Generally speaking, traditional communication systems support a limited number of connections and are easy to implement. However, with the development of communication technology, mobile communication systems will not only support traditional communications, but will also support, for example, device to device (D2D) communication, machine to machine (M2M) communication, machine type communication (MTC), vehicle to vehicle (V2V) communication, vehicle to everything (V2X) communication, etc. The embodiments of the present disclosure can also be applied to these communication systems.

In an embodiment, the communication system in the embodiments of the present disclosure can be applied to a carrier aggregation (CA) scenario, a dual connectivity (DC) scenario, a standalone (SA) scenario, or a non-standalone (NSA) scenario.

In an embodiment, the communication system in the embodiments of the present disclosure can be applied to an unlicensed spectrum, where the unlicensed spectrum can also be considered as a shared spectrum. Alternatively, the communication system in the embodiments of the present disclosure can also be applied to a licensed spectrum, where the licensed spectrum can also be considered as an unshared spectrum.

Various embodiments of the present disclosure are described in conjunction with a network device and a terminal device, where the terminal device may also be referred to as a user equipment (UE), an access terminal, a user unit, a user station, a mobile station, a mobile platform, a remote station, a remote UE, a mobile device, a user terminal, a terminal, a wireless communication device, a user agent, or a user device, etc.

The terminal device may be a station (ST) in a WLAN, a cellular phone, a cordless phone, a session initiation protocol (SIP) phone, a wireless local loop (WLL) station, a personal digital assistant (PDA) device, a handheld device with wireless communication functions, a computing device or other processing device connected to a wireless modem, a vehicle-mounted device, a wearable device, a terminal device in a next-generation communication system such as an NR network, or a terminal device in a future evolved public land mobile network (PLMN) network, etc.

In the embodiments of the present disclosure, the terminal device can be deployed on land, including indoors or outdoors, handheld, wearable or vehicle-mounted; can also be deployed on water (such as ships, etc.); and can also be deployed in the air (for example, on airplanes, balloons, and satellites, etc.).

In the embodiments of the present disclosure, the terminal device may be a mobile phone, a pad, a computer with wireless transceiving function, a virtual reality (VR) terminal device, an augmented reality (AR) terminal device, a wireless terminal device in industrial control, a wireless terminal device in self driving, a wireless terminal device in remote medical, a wireless terminal device in a smart grid, a wireless terminal device in transportation safety, a wireless terminal device in a smart city or a wireless terminal device in a smart home, etc.

As an example but not limitation, in the embodiments of the present disclosure, the terminal device may also be a wearable device. The wearable device may also be referred to as a wearable smart device, which is a general term for wearable devices that are intelligently designed and developed using wearable technology for daily wear, such as glasses, gloves, watches, clothing, and shoes. The wearable device is a portable device that is worn directly on the body or integrated into the user's clothes or accessories. The wearable device is not only a hardware device, but also can achieve powerful functions through software support, data interaction, and cloud interaction. The wearable smart device in a broad sense includes, for example, a smart watch or smart glasses with complete functions and large sizes and capable of realizing all or part of functions without relying on a smart phone, and for example, various types of smart bands and smart jewelries for physical monitoring, of which each is dedicated to application functions of a certain type and required to be used together with other devices such as a smart phone.

In the embodiments of the present disclosure, the network device may be a device for communicating with a mobile device. The network device may be an access point (AP) in WLAN, a base transceiver station (BTS) in GSM or CDMA, or a NodeB (NB) in WCDMA; or an evolutional base station (eNB or eNodeB), a relay station or access point, a vehicle-mounted device, or a wearable device in LTE; or a network device (gNB) in an NR network; or a network device in a future evolved PLMN network or a network device in an NTN, etc.

As an example and not a limitation, in the embodiments of the present disclosure, the network device may be mobile, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station set up in a location such as land or water.

In the embodiments of the present disclosure, the network device may provide services for a cell, and the terminal device may communicate with the network device through transmission resources (e.g., frequency domain resources, or spectrum resources) used by the cell. The cell may be a cell corresponding to a network device (e.g., a base station). The cell may belong to a macro base station or a base station corresponding to a small cell. The small cell here may include: a metro cell, a micro cell, a pico cell, a femto cell, etc. These small cells have the characteristics of small coverage and low transmission power, and are suitable for providing high-speed data transmission services.

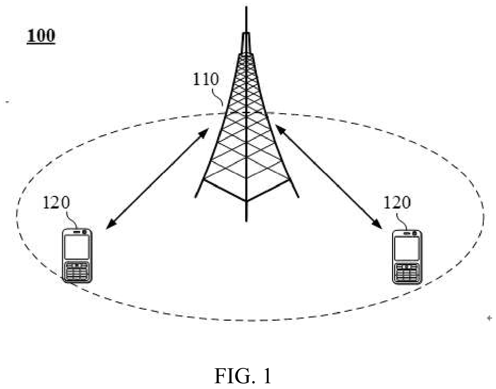

FIG. 1 exemplarily illustrates a communication system 100. The communication system includes a network device 110 and two terminal devices 120. In an embodiment, the communication system 100 may include multiple network devices 110, and other number of terminal devices 120 may be included within the coverage area of each network device 100, which is not limited in the embodiments of the present disclosure.

In an embodiment, the communication system 100 may further include other network entities such as a mobility management entity (MME), an access and mobility management function (AMF), etc., which is not limited in the embodiments of the present disclosure.

The network devices may include an access network device and a core network device. That is, the wireless communication system further includes multiple core networks for communicating with the access network device. The access network device may be an evolutional node B (eNB or e-NodeB for short), a macro base station, a micro base station (also called "small base station"), a pico base station, an AP, a transmission point (TP) or a new generation Node B (gNodeB) in an LTE system, an NR system (mobile communication system) or an authorized auxiliary access LTE (LAA-LTE) system.

It may be understood that, a device with communication functions in the network/system in the embodiments of the present disclosure can be called a communication device. Taking the communication system illustrated in FIG. 1 as an example, the communication device may include a network device and a terminal device with communication functions, and the network device and the terminal device may be specific devices in the embodiments of the present disclosure, which will not be repeated here. The communication devices may further include other devices in the communication system, such as a network controller, an MME, and other network entities, which is not limited in the embodiment of the present disclosure.

It may be understood that, the terms "system" and "network" are often used interchangeably in this article. The term "and/or" in this article is only a description of the association relationship of associated objects, indicating that there can be three relationships. For example, *A* and/or *B* can represent: *A* exists alone, *A* and *B* exist at the same time, and *B* exists alone. In addition, the character "/" in this article generally indicates that the associated objects before and after "/" are in an "or" relationship.

It may be understood that, the "indication" mentioned in the embodiments of the present disclosure can be a direct indication, an indirect indication, or an indication of an association relationship. For example, *A* indicates *B,* which can mean that *A* directly indicates *B,* for example, *B* can be obtained through *A*; can also mean that *A* indirectly indicates *B,* for example, *A* indicates C, and *B* can be obtained through *C*; can also mean that there is an association relationship between *A* and*B.*

In the illustration of the embodiments of the present disclosure, the term "corresponding" may indicate a direct or indirect correspondence between two items, or an association relationship between two items, or a relationship between indication and being indicated, configuration and being configured, and the like.

To facilitate understanding of the technical solutions of the embodiments of the present disclosure, the relevant technologies of the embodiments of the present disclosure are described below. The following related technologies as optional solutions can be arbitrarily combined with the technical solutions of the embodiments of the present disclosure, and they all belong to the protection scope of the embodiments of the present disclosure.

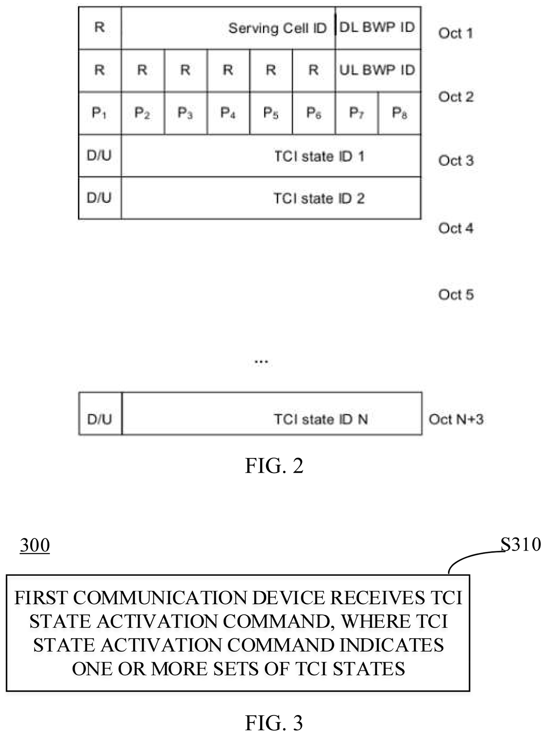

In the medium access control (MAC) specification, a transmission configuration indicator (TCI) state activation/deactivation MAC control element (CE) is used to activate up to 8 joint TCI states or uplink (UL)/downlink (DL) TCI states, which correspond to 8 codepoints in physical layer signaling DL control information (DCI). As illustrated in FIG. 2, FIG. 2 is a schematic diagram illustrating the format of an MAC CE.

For example, the unified TCI states activation/deactivation MAC CE is identified by a MAC subheader with extended logical channel identification (eLCID). It has a variable size consisting of following fields.

Serving cell ID: This field indicates the identity of the serving cell for which the MAC CE applies. The length of the field is 5 bits. If the indicated serving cell is configured as part of a *simultaneous U-TCI-UpdateList1, simultaneousU-TCI-UpdateList2, simultaneousU-TCI-UpdateList3* or *simultaneous U-TCI-UpdateList4* as specified in TS 38.331 [5], this MAC CE applies to all the serving cells in the set *simultaneous U-TCI-UpdateList1, simultaneousU-TCI-UpdateList2, simultaneous U-TCI-UpdateList3* or *simultaneous U-TCI-UpdateList4,* respectively.

DL bandwidth part (BWP) ID: This field indicates a DL BWP for which the MAC CE applies as the codepoint of the DCI *bandwidth part indicator* field as specified in TS 38.212 [9]. The length of the BWP ID field is 2 bits.

UL BWP ID: This field indicates a UL BWP for which the MAC CE applies as the codepoint of the DCI *bandwidth part indicator* field as specified in TS 38.212 [9]. The length of the BWP ID field is 2 bits.

Pᵢ: This field indicates whether each TCI codepoint has multiple TCI states or single TCI state. If Pᵢ field is set to 1, it indicates that i^{th} TCI codepoint includes the DL TCI state and the UL TCI state. If Pᵢ field is set to 0, it indicates that i^{th} TCI codepoint includes only the DL/joint TCI state or the UL TCI state. The codepoint to which a TCI state is mapped is determined by its ordinal position among all the TCI state ID fields.

D/U: This field indicate whether the TCI state ID in the same octet is for joint/DL or UL TCI state. If this field is set to 1, the TCI state ID in the same octet is for joint/DL. If this field is set to 0, the TCI state ID in the same octet is for UL.

TCI state ID: This field indicates the TCI state identified by *TCI-StateId* as specified in TS 38.331 [5]. If D/U is set to 1, 7-bits length TCI state ID i.e. *TCI-StateId* as specified in TS 38.331 [5] is used. If D/U is set to 0, the most significant bit of TCI state ID is considered as the reserved bit and remainder 6 bits indicate the *UL-TCIState-Id* as specified in TS 38.331 [5]. The maximum number of activated TCI states is 16.

R: Reserved bit, set to 0.

Unified TCI states activated by an MAC CE usually belong to a single transmission and reception point (TRP) in a serving cell. In the multiple-input-multiple-output (MIMO) project of R18, it is proposed to activate unified TCI states of two TRPs belonging to a serving cell, where one TRP is a serving TRP, and the other TRP is associated with an additional PCI, namely an incremental TRP.

A new MAC CE can be introduced to activate unified TCI states of two TRPs belonging to a serving cell.

For example, for the MAC CE enhancement, it is supported that each TCI codepoint corresponds to one or both TRP(s).

For example, for the MAC CE enhancement, it is supported that each corresponding TRP maps to:
one joint TCI state; or
a DL TCI state, a UL TCI state, or a pair of DL and UL TCI states.

For example, for sDCI based mTRP operation using unified TCI state framework, introduce the new MAC CE containing TCI state information of mTRPs.

If the signaling type of the unified TCI state configuration is configured by radio resource control (RRC) (i.e. either joint DL/UL TCI state or separate DL/UL TCI state), it applies to both TRPs.

Introduce the new field indicating if the unified TCI state of the second TRP is present or not.

Additionally, on unified TCI framework extension for S-DCI based MTRP operation, support the followings.

For a serving cell configured with joint DL/UL TCI mode, a full-set or any sub-set of {first joint TCI state, second joint TCI state} can be mapped to a TCI codepoint of the existing TCI field in a DCI format 1_1/1_2 by TCI state activation command (MAC-CE).

For a serving cell configured with separate DL/UL TCI mode, a full-set or any sub-set of {first DL TCI state, first UL TCI state, second DL TCI state, second UL TCI state} can be mapped to a TCI codepoint of the existing TCI field in a DCI format 1_1/1_2 by TCI state activation command (MAC-CE).

TCI state activation command (MAC-CE) should indicate that each joint/DL/UL TCI state mapped to a TCI codepoint is the first or second joint/DL/UL TCI state.

The first/second indicated joint/DL/UL TCI state(s) is updated according to the corresponding first/second joint/DL/UL TCI state(s) mapped to the TCI codepoint received by the UE

If the UE receives a TCI codepoint mapped with a sub-set of {first joint TCI state, second joint TCI state} or {first DL TCI state, first UL TCI state, second DL TCI state, second UL TCI state}, the UE shall update the first/second indicated joint/DL/UL TCI state(s) according to the first/second joint/DL/UL TCI state(s) in the subset and keep other indicated first/second joint/DL/UL TCI state(s) that is not updated by the received TCI codepoint.

FIG. 3 is a schematic flow chart of a communication method 300 according to an embodiment of the present disclosure. The method may optionally be applied to the system illustrated in FIG. 1, but is not limited thereto. The method includes at least part of the following contents.

S310, a first communication device receives a TCI state activation command, where the TCI state activation command indicates one or more sets of TCI states.

In the embodiments of the present disclosure, the first communication device, such as a terminal device, can receive the TCI state activation command from a second communication device, such as a network device. The TCI state activation command is used to activate multiple, for example, up to 8 TCI states, corresponding to 8 codepoints in physical layer signaling DCI. The TCI state activation command may be carried in a MAC CE.

In an embodiment, there is a corresponding relationship between TRPs and TCI states, and the multiple sets of TCI states include unified TCI states of multiple TRPs. For example, unified TCI states of two TRPs belonging to a serving cell can be activated via the TCI state activation command, where one TRP is a serving TRP, and the other TRP is associated with an additional PCI (also referred to as an incremental TRP). The serving TRP corresponds to one set of TCI states, and the incremental TRP corresponds to another set of TCI states.

In an embodiment, the multiple sets of TCI states include a first set of TCI states and a second set of TCI states. For example, the TCI state activation command indicates two sets of TCI states, and each set of TCI states may include one or more TCI states. For example, a set of TCI states includes one or more of: DL and UL TCI states, a DL TCI state, a UL TCI state, a DL or UL TCI state, a joint TCI state, none, etc.

In an embodiment, the TCI state activation command is carried in a MAC CE sent by the second communication device, where the first communication device is a terminal device, and the second communication device is a network device.

In an embodiment, the TCI state activation command contains a first parameter, and the first parameter corresponds to the first set of TCI states.

In an embodiment, the first parameter includes 2 or more bits.

In an embodiment, the first set of TCI states includes at least one of:
first DL and UL TCI states;
a first DL TCI state;
a first UL TCI state; or
none.

In the embodiments of the present disclosure, the first set of TCI states may include a combination of multiple TCI states. The order of these TCI states may not be limited. For example, the order in the first set of TCI states may be {first DL and UL TCI state, first DL TCI state, first UL TCI state, none}, or may be {first DL TCI state, first UL TCI state, first DL and UL TCI state, none}. Certainly, these TCI states may be in other orders, which are not exhaustive. The order in the first set of TCI states and/or the second set of TCI states described below is also similar.

In the embodiments of the present disclosure, the first parameter may include multiple bits, the multiple bits may constitute multiple values, and each value may correspond to a TCI state in the first set of TCI states. For example, the first parameter Fᵢ in the MAC CE includes 2 bits, and the values of the 2 bits may be {11, 10, 01, 00}, where 11 may correspond to the first DL and UL TCI states, 10 may correspond to the first DL TCI state, 01 may correspond to the first UL TCI state, and 00 may correspond to none. For another example, Fᵢ includes 3 bits, and the values of the 3 bits may be {111, 110, 101, 100, 011, 010, 001, 000}, where 110 may correspond to the first DL and UL TCI states, 101 may correspond to the first DL TCI state, 011 may correspond to the first UL TCI state, and 000 may correspond to none. Other values of Fᵢ may not be used. The values of the first parameter and their corresponding TCI states mentioned above are only examples and not limitations, and can be flexibly set according to actual needs. For example, 11 may correspond to the first DL TCI state, and 01 may correspond to none, and so on.

In an embodiment, the first set of TCI states includes at least one of:
first DL and UL TCI states;
a first DL or UL TCI state; or
none.

For example, Fᵢ in the MAC CE includes 2 bits, and the values of the 2 bits may be {11, 10, 01, 00}, where 11 may correspond to the first DL and UL TCI states, 10 may correspond to the first DL or UL TCI state, 01 may correspond to none. 00 may not be used. For another example, Fᵢ includes 3 bits, and the values of the 3 bits may be {111, 110, 101, 100, 011, 010, 001, 000}, where 110 may correspond to the first DL and UL TCI state, 101 may correspond to the first DL or UL TCI state, and 011 may correspond to none. Other values of Fᵢ may not be used. The values of the first parameter and their corresponding TCI states mentioned above are only examples and not limitations, and can be flexibly set according to actual needs. For example, 11 may correspond to the first DL or UL TCI state, 01 may correspond to none, etc.

In an embodiment, the first set of TCI states includes at least one of:
a first joint TCI state; or
none.

For example, the first parameter Fᵢ in the MAC CE includes 2 bits, and the values of the 2 bits may be {11, 10, 01, 00}, where 11 may correspond to the first joint TCI state, 10 may correspond to none. 01 and 00 may not be used. Fᵢ in the MAC CE includes 1 bit, and the two values of the 1 bit may be {1, 0}, where 1 may correspond to the first joint TCI state, and 0 may correspond to none. For another example, Fi includes 3 bits, and the values of the 3 bits may be {111, 110, 101, 100, 011, 010, 001, 000}, where 110 may correspond to the first joint TCI state, and 101 may correspond to none. Other values of Fᵢ may not be used. The values of the first parameter and corresponding TCI states mentioned above are only examples and not limitations, and can be flexibly set according to actual needs. For example, 11 may correspond to none, and 01 may correspond to the first joint TCI state.

In an embodiment, the TCI state activation command contains a second parameter, and the second parameter corresponds to a second set of TCI states.

In an embodiment, in the TCI state activation command, the first set of TCI states is before the second set of TCI states. For example, in the format of the MAC CE, the first parameter is before the second parameter.

In an embodiment, the second parameter includes 2 or more bits.

In an embodiment, the second set of TCI states includes at least one of:
second DL and UL TCI states;
a second DL TCI state;
a second UL TCI state; or
none.

In the embodiments of the present disclosure, the second set of TCI states may include a combination of multiple TCI states. The order of these TCI states may not be limited.

In the embodiments of the present disclosure, the second parameter may include multiple bits, the multiple bits may constitute multiple values, and each value may correspond to a TCI state in the second set of TCI states. For example, the second parameter Sᵢ in the MAC CE includes 2 bits, and the values of the 2 bits may be {11, 10, 01, 00}, where 11 may correspond to the second DL and UL TCI states; 10 may correspond to the second DL TCI state, 01 may correspond to the second UL TCI state, and 00 may correspond to none. For another example, Sᵢ includes 3 bits, and the values of the 3 bits may be {111, 110, 101, 100, 011, 010, 001, 000}, where 110 may correspond to the second DL and UL TCI states, 101 may correspond to the second DL TCI state, 011 may correspond to the second UL TCI state, and 000 may correspond to none. Other values of Sᵢ may not be used. The values of the second parameters and their corresponding TCI states mentioned above are only examples and not limitations, and can be flexibly set according to actual needs. For example, 11 may correspond to the second DL TCI state, 01 may correspond to none, and so on.

In an embodiment, the second set of TCI states includes at least one of:
second DL and UL TCI states;
a second DL or UL TCI state; or
none.

Sᵢ in the MAC CE includes 2 bits, and the values of the 2 bits may be {11, 10, 01, 00}, where 11 may correspond to the second DL TCI state and the UL TCI state, 10 may correspond to the second DL or the UL TCI state, 01 may correspond to none. 00 may not be used. For another example, Sᵢ includes 3 bits, and the values of the 3 bits may be {111, 110, 101, 100, 011, 010, 001, 000}, where 110 may correspond to the second DL TCI state and the UL TCI state, 101 may correspond to the second DL TCI state or the UL TCI state, and 011 may correspond to none. Other values of Sᵢ may not be used. The values of the second parameter and their corresponding TCI states mentioned above are only examples and not limitations, and can be flexibly set according to actual needs. For example, 11 may correspond to the second DL TCI state or the second UL TCI state, 01 may correspond to none, etc.

In an embodiment, the second set of TCI states includes at least one of:
a second joint TCI state; or
none.

For example, the second parameter Sᵢ in the MAC CE includes 2 bits, and the values of the 2 bits may be {11, 10, 01, 00}, where 11 may correspond to the first joint TCI state, and 10 may correspond to none. 01 and 00 may not be used. Sᵢ in the MAC CE includes 1 bit, and the values may be {1, 0}, where 1 may correspond to the first joint TCI state, and 0 may correspond to none. For another example, Sᵢ includes 3 bits, and the values of the 3 bits may be {111, 110, 101, 100, 011, 010, 001, 000}, where 110 may correspond to the first joint TCI state, and 101 may correspond to none. Other values of Sᵢ may not be used. The values of the first parameter and their corresponding TCI states mentioned above are only examples and not limitations, and can be flexibly set according to actual needs. For example, 11 may correspond to none, and 01 may correspond to the first joint TCI state.

In an embodiment, the sequence number of a TCI state jointly indicated by the first parameter and the second parameter correspond to a codepoint indicating a TCI state in physical layer signaling.

In the embodiments of the present disclosure, multiple sets of TCI states can be jointly indicated by multiple parameters. In one case, the TCI state activation command may contain the first parameter and the second parameter. For example, in the MAC CE, acombination of the first set of TCI states and the second set of TCI states is jointly indicated by the first parameter Fᵢ and the second parameter Sᵢ. i may represent the sequence number of the TCI state jointly indicated by Fi and Si. The i-th state jointly indicated by Fi and Si corresponds to the i-th codepoint indicating a TCI state in physical layer signaling. For example, the first state indicated by F₁ and S₁ corresponds to the first codepoint indicating a TCI state in physical layer signaling. The eighth state indicated by F₈ and S₈ corresponds to the eighth codepoint indicating a TCI state in physical layer signaling.

In the embodiments of the present disclosure, joint indication may also be referred to as combined indication, common indication, etc. The joint indication may include multiple indication modes, and several examples are introduced below. The specific values of the two parameters and their corresponding TCI states in the examples may vary.

For example, the first parameter F₁ is 11, corresponding to the first DL and UL TCI states in the first set of TCI states, the second parameter S₁ is 11, corresponding to the second DL and UL TCI states in the second set of TCI states, and F₁ and S₁ jointly indicate the first DL and UL TCI states and the second DL and UL TCI states. For example, the first parameter F₂ is 10, corresponding to the first DL TCI state in the first set of TCI states, and the second parameter S₂ is 10, corresponding to the second DL TCI state in the second set of TCI states, and F₂ and S₂ jointly indicate the first DL TCI state and the second DL TCI state.

For another example, the first parameter F₂ is 10, corresponding to the first DL or UL TCI state in the first set of TCI states, the second parameter S₂ is 10, corresponding to the second DL or UL TCI state in the second set of TCI states, and F₂ and S₂ jointly indicate the first DL or UL TCI state, and the second DL or UL TCI state. For another example, the first parameter F₄ is 11, corresponding to the first DL and UL TCI states in the first set of TCI states, the second parameter S₄ is 10, corresponding to the second DL or UL TCI state in the second set of TCI states, and F4 and S4 jointly indicate the first DL and UL TCI state, and the second DL or UL TCI state.

For another example, the first parameter F₁ is 11, corresponding to the first joint TCI state, the second parameter S₁ is 11, corresponding to the second joint TCI state in the second set of TCI states, and F₁ and S₁ jointly indicate the first joint TCI state and the second joint TCI state. For another example, the first parameter F₂ is 11, corresponding to the first joint TCI state, the second parameter S₂ is 10, corresponding to none in the second set of TCI states, and F₂ and S₂ jointly indicate the first joint TCI state and none. For another example, the first parameter F₃ is 10, corresponding to none, the second parameter S₃ is 11, corresponding to the second joint TCI state in the second set of TCI states, and F₂ and S₂ jointly indicate none and the second joint TCI state.

In an embodiment, the TCI state activation command contains a third parameter, and the third parameter corresponds to a combination of the first set of TCI states and the second set of TCI states.

In an embodiment, the sequence number of a TCI state indicated by the third parameter corresponds to a codepoint indicating a TCI state in physical layer signaling. In the embodiments of the present disclosure, multiple sets of TCI states may be indicated by one parameter. For example, in a MAC CE, a combination of the first set of TCI states and the second set of TCI states is indicated by the third parameter Tᵢ. i may represent the sequence number of a TCI state indicated by Tᵢ. The i-th state indicated by Ti corresponds to the i-th codepoint indicating a TCI state in physical layer signaling. For example, the first state indicated by T₁ corresponds to the first codepoint indicating a TCI state in physical layer signaling. The eighth state indicated by T₈ corresponds to the eighth codepoint indicating a TCI state in physical layer signaling.

In an embodiment, the combination of the first set of TCI states and the second set of TCI states includes at least one of:
first DL and UL TCI states and second DL and UL TCI states;
the first DL and UL TCI states and a second DL or UL TCI state;
the first DL and UL TCI states;
a first DL or UL TCI state and the second DL and UL TCI states;
the first DL or UL TCI state and the second DL or UL TCI state;
the first DL or UL TCI state;
the second DL and UL TCI states; or
the second DL or UL TCI state.

In the embodiments of the present disclosure, the order of multiple TCI states included in the combination of the first set of TCI states and the second set of TCI states may not be limited. For example, the order in the combination of the first set of TCI states and the second set of TCI states may be {first DL and UL TCI state and second DL and UL TCI state, first DL and UL TCI state and second DL or UL TCI state, first DL or UL TCI state and second DL and UL TCI state, first DL or UL TCI state and second DL or UL TCI state, first DL and UL TCI state, first DL or UL TCI state, second DL and UL TCI state, second DL or UL TCI state}. For another example, the order in the combination of the first set of TCI states and the second set of TCI states may be {first DL and UL TCI state, first DL or UL TCI state, second DL and UL TCI state, second DL or UL TCI state, first DL and UL TCI state and second DL and UL TCI state, first DL and UL TCI state and second DL or UL TCI state, first DL or UL TCI state and second DL and UL TCI state, first DL or UL TCI state and second DL or UL TCI state}.

In an embodiment, the third parameter includes 3 or more bits.

For example, the third parameter Tᵢ includes 3 bits, and the values of the 3 bits may be {111, 110, 101, 100, 011, 010, 001, 000}, where 111 may correspond to the first DL and UL TCI states and the second DL and UL TCI states, 110 may correspond to the first DL and UL TCI states and the second DL or UL TCI state, 101 may correspond to the first DL and UL TCI states, 100 may correspond to the first DL or UL TCI state and the second DL and UL TCI states, 011 may correspond to the first DL or UL TCI state and the second DL or UL TCI state, 010 may correspond to the first DL or UL TCI state, 001 may correspond to the second DL and UL TCI state, and 000 may correspond to the second DL or UL TCI state. The values of the third parameters and their corresponding TCI states mentioned above are only examples and not limitations, and can be flexibly set according to actual needs. For example, 111 may correspond to the second DL or UL TCI state, and 000 may also correspond to the first DL and UL TCI state and the second DL and UL TCI state, etc. The third parameter may include 4 or more bits, and specific examples can be deduced and are not exhaustive.

In an embodiment, the DL and UL TCI states include a DL TCI state and a UL TCI state. For example, the first DL and UL TCI states include the first DL TCI state and the first UL TCI state. The first DL TCI state may be before the first UL TCI state. For another example, the second DL and UL TCI states include the second DL TCI state and the second UL TCI state. The second DL TCI state may be before the second UL TCI state.

In an embodiment, the DL or UL TCI state includes a DL TCI state or a UL TCI state. For example, the above-mentioned first DL or UL TCI state includes the first DL TCI state or the first UL TCI state. The first DL or UL TCI state may not be distinguished between UL and DL, for example, may be directly expressed as the first TCI state, and then UL or DL is indicated by an indicator bit indicating a UL or DL direction, such as a fifth parameter described below. For another example, the above-mentioned second DL or UL TCI state includes the second DL TCI state or the second UL TCI state. The second DL or UL TCI state may not be distinguished between UL and DL, for example, may be directly expressed as the second TCI state, and then UL or DL is indicated by the indicator bit indicating a UL or DL direction, such as the fifth parameter described below.

In an embodiment, the TCI state activation command contains a fourth parameter, and the fourth parameter corresponds to multiple sets of joint TCI states.

In an embodiment, the sequence number of a TCI state indicated by the fourth parameter corresponds to a TCI codepoint indicating a TCI state in physical layer signaling. In the embodiments of the present disclosure, multiple sets of joint TCI states may be indicated by one parameter. For example, in a MAC CE, multiple sets of joint TCI states are indicated by the fourth parameter FTᵢ. i may represent the sequence number of a TCI state indicated by FTᵢ. The i-th state indicated by FTᵢ corresponds to the i-th codepoint indicating a TCI state in physical layer signaling. For example, the first state indicated by FT₁ corresponds to the first codepoint indicating a TCI state in physical layer signaling, and the eighth state indicated by FT₈ corresponds to the eighth codepoint indicating a TCI state in physical layer signaling.

In an embodiment, the multiple sets of joint TCI states include at least one of:
the first joint TCI state and the second joint TCI state;
the first joint TCI state; or
the second joint TCI state.

In the embodiments of the present disclosure, the order of the multiple joint TCI states included in the multiple sets of joint TCI states may not be limited. For example, the order in the multiple sets of joint TCI states may be {first joint TCI state and second joint TCI state, first joint TCI state, second joint TCI state}. For another example, the order in the multiple sets of joint TCI states may be {first joint TCI state, first joint TCI state and second joint TCI state, second joint TCI state}. For another example, the order in the multiple sets of joint TCI states may be {first joint TCI state, second joint TCI state, first joint TCI state and second joint TCI state}. The above examples may also include none.

In an embodiment, the fourth parameter includes 2 or more bits. For example, the fourth parameter FTᵢ includes 2 bits, and the values of the 2 bits may be {11, 10, 01, 00}, where 11 may correspond to the first joint TCI state and the second joint TCI state, 10 may correspond to the first joint TCI state, and 01 may correspond to the second joint TCI state. 00 may not be used, or may correspond to none. For another example, FTᵢ includes 3 bits, and the values of the 3bits may be {111, 110, 101, 100, 011, 010, 001, 000}, where 110 may correspond to the first joint TCI state and the second joint TCI, 101 may correspond to the first joint TCI state, and 011 may correspond to the second joint TCI state. Other values of FTᵢ may not be used. The values of the fourth parameter and their corresponding TCI states mentioned above are only examples and not limitations, and can be flexibly set according to actual needs. For example, 11 may correspond to the second joint TCI state, 01 may correspond to the first joint TCI state and the second joint TCI state, etc. The fourth parameter may include 4 or more bits, and specific examples can be deduced and are not exhaustive.

In an embodiment, the joint TCI state indicates that a TCI state includes a UL TCI state and a DL TCI state.

In an embodiment, the TCI state activation command contains the fifth parameter, and the fifth parameter indicates UL or DL. For example, in a MAC CE, the fifth parameter may represent an indicator bit associated with a TCI state identifier (ID), such as an indicator bit before the TCI state ID. The indicator bit may indicate UL or DL. For example, when the indicator bit is D/U in the MAC CE format, the indicator bit may indicate UL or DL. When the value of the indicator bit is 1, the indicator bit indicates UL, and when the value of the indicator bit is 0, the indicator bit indicates DL. Alternatively, when the value of the indicator bit is 0, the indicator bit indicates UL, and when the value of the indicator bit is 1, the indicator bit indicates DL. For another example, when the indicator bit is R in the MAC CE format, the indicator bit may not indicate UL or DL, and the value of the indicator bit being 1 or 0 does not indicate UL or DL.

In the embodiments of the present disclosure, the fifth parameter may be combined with one or more of the first parameter, the second parameter, the third parameter, or the fourth parameter. For example, in a MAC CE, the first parameter may correspond to the first UL or DL TCI state, the second parameter may correspond to the second UL or DL TCI state, and the fifth parameter may indicate whether these TCI states are UL or DL. For another example, in a MAC CE, the third parameter may indicate the first UL or DL TCI state, or the second UL or DL TCI state, and the fifth parameter may indicate whether these TCI states are UL or DL.

Fᵢ, Sᵢ, Tᵢ, F_{T}, etc. in the embodiments of the present disclosure are only examples and not limitations. In practical applications, the parameter expressions can be modified according to requirements. For example, the third parameter or the fourth parameter may be expressed as Fi. For another example, the first parameter is expressed as PA, the second parameter is expressed as PB, and the third parameter is expressed as P, etc.

In the embodiments of the present disclosure, one or more sets of TCI states can be flexibly activated by one or more parameters in the TCI state activation command. One set of TCI states may correspond to one TRP, and multiple sets of TCI states may correspond to multiple sets of TRPs, respectively. For example, in multiple TRPs in a MIMO scenario, the function of activating unified TCI states of multiple TRPs can be realized.

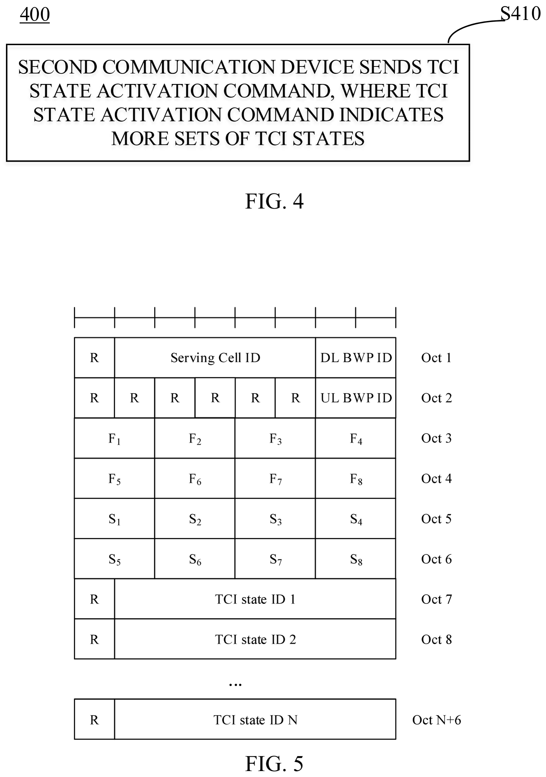

FIG. 4 is a schematic flow chart of a communication method 400 according to another embodiment of the present disclosure. The method 400 may optionally be applied to the system as illustrated in FIG. 1, but is not limited thereto. The method includes at least part of the following contents.

S410, a second communication device sends a TCI state activation command, where the TCI state activation command indicates multiple sets of TCI states.

In an embodiment, there is a corresponding relationship between TRPs and TCI states, and the multiple sets of TCI states include unified TCI states of multiple TRPs.

In an embodiment, the multiple sets of TCI states include a first set of TCI states and a second set of TCI states.

In an embodiment, the TCI state activation command contains a first parameter, and the first parameter corresponds to the first set of TCI states.

In an embodiment, the first set of TCI states includes at least one of:
first DL and UL TCI states;
a first DL TCI state;
a first UL TCI state; or
none.

In an embodiment, the first set of TCI states includes at least one of:
first DL and UL TCI states;
first DL or UL TCI state; or
none.

In an embodiment, the first set of TCI states includes at least one of:
a first joint TCI state; or
none.

In an embodiment, the first parameter includes 2 or more bits.

In an embodiment, the TCI state activation command contains a second parameter, and the second parameter corresponds to the second set of TCI states.

In an embodiment, in the TCI state activation command, the first set of TCI states is before the second set of TCI states.

In an embodiment, the second set of TCI states includes at least one of:
second DL and UL TCI states;
a second DL TCI state;
a second UL TCI state; or
none.

In an embodiment, the second set of TCI states includes at least one of:
second DL and UL TCI states;
a second DL or UL TCI state; or
none.

In an embodiment, the second set of TCI states includes at least one of:
a second joint TCI state; or
none.

In an embodiment, the second parameter includes 2 or more bits.

In an embodiment, the sequence number of a TCI state jointly indicated by the first parameter and the second parameter corresponds to a codepoint indicating a TCI state in physical layer signaling.

In an embodiment, the TCI state activation command contains a third parameter, and the third parameter corresponds to a combination of the first set of TCI states and the second set of TCI states.

In an embodiment, the combination of the first set of TCI states and the second set of TCI states includes at least one of:
first DL and UL TCI states and second DL and UL TCI states;
the first DL and UL TCI states and a second DL or UL TCI state;
the first DL and UL TCI states;
a first DL or UL TCI state and the second DL and UL TCI states;
the first DL or UL TCI state and the second DL or UL TCI state;
the first DL or UL TCI state;
the second DL and UL TCI states; or
the second DL or UL TCI state.

In an embodiment, the third parameter includes 3 or more bits.

In an embodiment, the sequence number of a TCI state indicated by the third parameter corresponds to a codepoint indicating a TCI state in physical layer signaling.

In an embodiment, the TCI state activation command contains a fourth parameter, and the fourth parameter corresponds to multiple sets of joint TCI states.

In an embodiment, the multiple sets of joint TCI states include at least one of:
a first joint TCI state and a second joint TCI state;
the first joint TCI State; or
the second joint TCI state.

In an embodiment, the fourth parameter includes 2 or more bits.

In an embodiment, the joint TCI state represents that a TCI state includes a UL TCI state and a DL TCI state.

In an embodiment, the sequence number of a TCI state indicated by the fourth parameter corresponds to a TCI codepoint indicating a TCI state in physical layer signaling.

In an embodiment, the DL and UL TCI states include a DL TCI state and a UL TCI state.

In an embodiment, the DL or UL TCI state includes a DL TCI state or a UL TCI state.

In an embodiment, the TCI state activation command contains a fifth parameter, and the fifth parameter indicates UL or DL.

In an embodiment, the TCI state activation command is carried in a MAC CE sent by the second communication device, a first communication device is a terminal device, and the second communication device is a network device.

For a specific example of the second communication device executing the method 400 of this embodiment, reference may be made to the related illustration about the second communication device, such as the network device, in the method executed by the first communication device, which will not be described again for the sake of brevity.

In the embodiments of the present disclosure, a unified TCI state being activated may include that a joint TCI state and a DL or UL TCI state (DL/UL TCI state) are activated. In a MAC CE, a 2-bit parameter is used to represent a combination of DL/UL TCI states, such as {DL&UL TCI state, DL TCI state, UL TCI state, none}. The combination of the first set of TCI states and the combination of the second set of TCI states may be represented by the 2 bits mentioned above, respectively.

If the MAC CE of the joint TCI state is designed separately, the 2-bit parameter may represent a combination of the following example {1^{st} joint TCI state, 2^{nd} joint TCI state, 1^{st} joint TCI state and 2^{nd} joint TCI state}.

In the embodiments of the present disclosure, the relationship between the TCI state and TCI state ID may be that the TCI state ID is an index configured by a DL or UL BWP of a serving cell where the TCI state is located. If there is only the TCI state ID in the MAC CE, it may represent the TCI state pointed to by the index.

### Example 1: The schematic block diagram of MAC CE format 1 is illustrated in FIG. 5.

In this example, except for parameters Fᵢ and Sᵢ, the meanings of other parameters are the same as those in the MAC CE in the related art. The meaning of Fᵢ may include the following examples.

The 2 bits of Fᵢ and Sᵢ are used to represent 4 combinations of DL/UL TCI states, such as {DL TCI state & UL TCI state, DL TCI state, UL TCI state, none}. None may mean that there is no corresponding TCI state. For example, the values of the 2 bits corresponding to these combinations may be {11, 10, 01, 00}, for example, 11 may correspond to the DL TCI state & UL TCI state, 10 may correspond to the DL TCI state, 01 may correspond to the UL TCI state, and 00 may corresponds to none. The definition and order of the values of Fᵢ and Sᵢ, and their corresponding TCI states may vary. For example, the values of the 2 bits of Fᵢ and Sᵢ may be {10, 01, 00, 11}, where 10 may correspond to the UL TCI state, 01 may correspond to the DL TCI state, 00 may correspond to the DL TCI state & UL TCI state, and 11 may correspond to none. In the embodiments of the present disclosure, other value definitions are not excluded.

Fᵢ may correspond to the first set of TCI states, and Sᵢ may correspond to the second set of TCI states. All TCI state IDs corresponding to Fᵢ and Sᵢ in the MAC CE format correspond to the i-th codepoint in physical layer DCI, for example, 1<=i<=8. The number of codepoints may also vary.

For the combination "DL TCI state & UL TCI state", it may mean that the DL TCI state ID and the UL TCI state ID may be both in the MAC CE format, and the order of these two TCI state IDs is fixed in the MAC CE. For example, the DL TCI state ID always is before the UL TCI state ID or vice versa. Since Fᵢ and Sᵢ are set separately, corresponding 4 combinations and 4 combinations can result in 16 combinations. The combination {none, none} may be invalid, because it means that neither the first set of TCI states nor the second set of TCI states are in the MAC CE, and Fᵢ and/or Sᵢ indicate a combination of TCI state IDs corresponding to a valid codepoint. In this format, the positions of Fᵢ and Sᵢ are fixed (for example, the order of Fᵢ and Sᵢ can be reversed, or other orders can be included), and the TCI state IDs corresponding to Fᵢ and Sᵢ are also arranged in ascending order of i.

For example, the values of F₁ and S₁ are 01 and 11 respectively, which may indicate that the combination of TCI states corresponding to the first codepoint is {1^{st} UL TCI state, 2^{nd} DL TCI state and UL TCI state}. The 1^{st} UL TCI state is one of the first set of TCI states, corresponding to a first TRP such as a serving TPR, and the 2^{nd} DL TCI state and UL TCI state is one of the second set of TCI states, corresponding to a second TRP such as an incremental TPR.

For the joint TCI state, under the premise of using the same MAC CE format, the combination that Fᵢ and Sᵢ need to represent is {joint TCI state, none}. In one example, Fᵢ and Si each only has 1 bit, and their values are different from that in the cases of the UL/DL TCI state. For example, the joint TCI state may correspond to {01,00}. In this case, the two values 10 and 11 may be invalid. For example, in the case where F₁ is 01 and S₁ is 01, the combination of TCI states corresponding to the first codepoint is {1^{st} joint TCI state, 2^{nd} joint TCI state}. The 1^{st} joint TCI state is one of the first set of TCI states, corresponding to the first TRP such as the serving TPR, and the 2^{nd} joint TCI state is one of the second set of TCI states, corresponding to the second TRP such as the incremental TPR. For another example, in the case where F₂ is 01 and S₂ is 00, the combination of TCI states corresponding to the first codepoint is {1^{st} joint TCI state, none}. The 1^{st} joint TCI state is one of the first set of TCI states, corresponding to the first TRP such as the serving TPR, and none is one of the second set of TCI states, corresponding to the second TRP such as the incremental TPR.

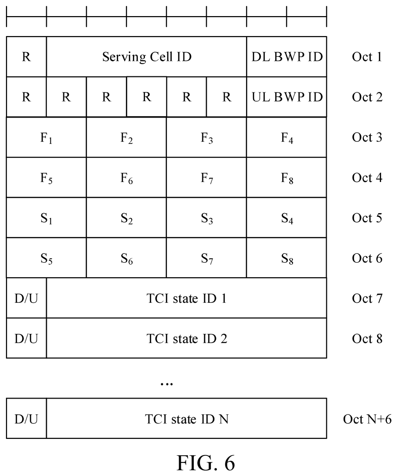

### Example 2: The schematic block diagram of MAC CE format 2 is illustrated in FIG. 6.

For this format, the D/U bit in the MAC CE of the related technology can be reused. Compared with the format in Example 1, the main difference is that the combination of TCI states corresponding to Fi and Sᵢ in this case may be {DL TCI state & UL TCI state, DL/UL TCI state, none}. DL/UL TCI state represents the DL TCI state or the UL TCI state. This is because the difference between the DL TCI state and the UL TCI state can be reflected in the D/U bit.

For the combination of "DL TCI state and UL TCI state", for the same reason, the order between the DL TCI state and the UL TCI state does not need to be fixed.

In this format, the design of the joint TCI state can be the same as the MAC CE format in this example, because the D/U bit can be ignored for the joint TCI state.

For example, the values of F₁ and S₁ are 11 and 10 respectively, which can indicate that the combination of TCI states corresponding to the first codepoint is {1^{st} DL TCI state & UL TCI state, 2^{nd} DL /UL TCI state}. The 1^{st} DL TCI state & UL TCI state is one of the first set of TCI states, corresponding to the first TRP such as the serving TPR, and the 2^{nd} DL/UL TCI state is one of the second set of TCI states, corresponding to the second TRP such as the incremental TPR.

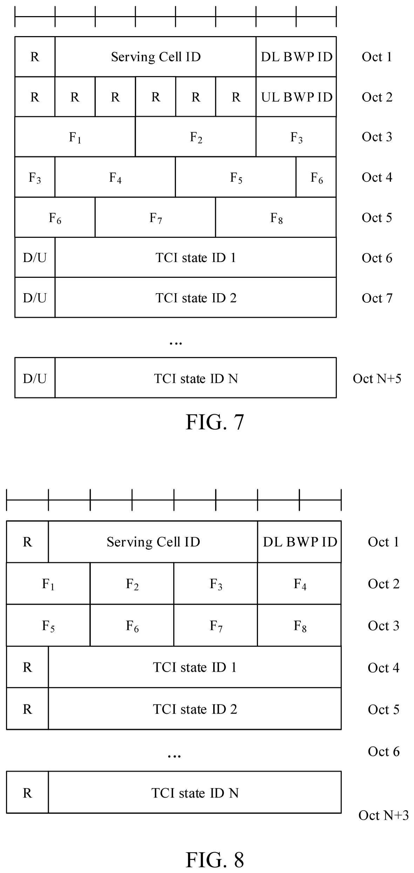

### Example 3: The schematic block diagram of MAC CE format 3 is illustrated in FIG. 7.

The D/U bit in the format may have the same meaning as in the previous format. In this case, the 3 bits of Fᵢ can represent a combination of the first set of TCI states and the second set of TCI states. An example is as follows:
{1^{st} DL &UL TCI state and 2^{nd} DL &UL TCI state,
1^{st} DL & UL TCI state and 2^{nd} DL /UL TCI state,
1^{st} DL&UL TCI state,
1^{st} DL/UL TCI state and 2^{nd} DL&UL TCI state,
1^{st} DL/UL TCI state and 2^{nd} DL / UL TCI state,
1^{st} DL/UL TCI state,
2^{nd} DL&UL TCI state,
2^{nd} DL/UL TCI state}

The DL&UL TCI state, which may also be written as DL TCI state & UL TCI state, may represent a pair of DL TCI state and UL TCI state. The DL/UL TCI state may represent the DL TCI state or the UL TCI state. If there is the D/U bit, the order between DL and UL in the DL&UL TCI state does not need to be fixed.

For example, the value of F₁ is 111, which may indicate that the combination of TCI states corresponding to the first codepoint is {1^{st} DL & UL TCI state, 2^{nd} DL & UL TCI state}. For example, the value of F₂ is 110, which may indicate that the combination of TCI states corresponding to the first codepoint is {1^{st} DL & UL TCI state, 2^{nd} DL/UL TCI state}. For example, the value of F₃ is 101, which may indicate that the combination of TCI states corresponding to the first codepoint is {1^{st} DL&UL TCI state, none}.

The order in the combination of the first set of TCI states and the second set of TCI states and corresponding relationships of the values of Fᵢ can be adjusted at will, which is not limited in the embodiments of the present disclosure.

The joint TCI state can be represented by 2 bits of Fᵢ in this format. For example, the coding method in MAC CE format 4 can be used to represent the joint TCI state.

### Example 4: A schematic block diagram of MAC CE format 4 is illustrated in FIG. 8.

For the joint TCI state, the first set of TCI states and the second set of TCI states can also be combined and unified, such as {1^{st} joint TCI state and 2^{nd} joint TCI state, 1^{st} joint TCI state, 2^{nd} joint TCI state}. In this way, only 2 bits are needed to represent all combinations.

This purpose can be achieved by using 2 bits of Fᵢ or Sᵢ, provided that MAC CE format 1 or MAC CE format 2 is the same. In MAC CE format 3, this purpose can be achieved by using 2 bits of Fᵢ.

If the MAC CE designed for the joint TCI state adopts a separate MAC CE format instead of using the same MAC CE format for the DL/UL TCI state, the MAC CE format for the joint TCI state can be simplified as follows:
in this format, the UL BWP ID and the R bit mentioned above can be omitted because the joint TCI state ID can be configured by the DL BWP. This manner can save signaling overhead of 3 bytes.

By adopting any of the MAC CE formats in the above examples, the function of activating the unified TCI states can be realized in multiple TRPs of MIMO.

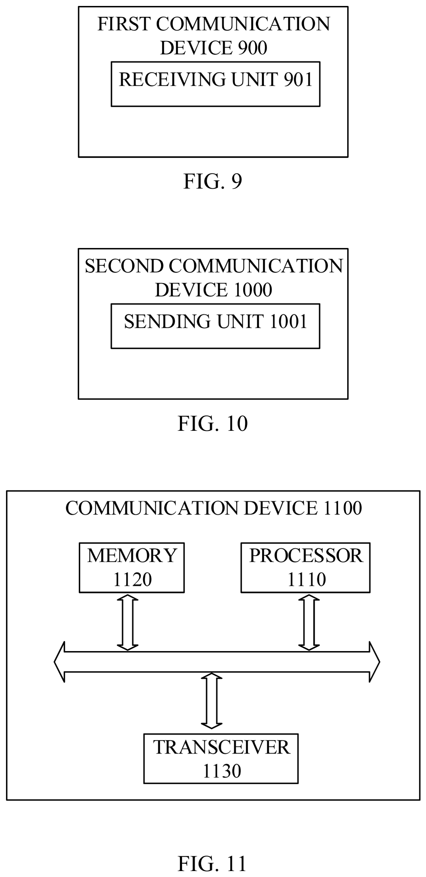

FIG. 9 is a schematic block diagram of a first communication device 900 according to an embodiment of the present disclosure. The terminal device 900 may include a receiving unit 901 configured to receive a TCI state activation command, where the TCI state activation command indicates one or more sets of TCI states.

In an embodiment, there is a corresponding relationship between TRPs and TCI states, and the multiple sets of TCI states include unified TCI states of multiple TRPs.

In an embodiment, the multiple sets of TCI states include a first set of TCI states and a second set of TCI states.

In an embodiment, the TCI state activation command contains a first parameter, and the first parameter corresponds to the first set of TCI states.

In an embodiment, the first set of TCI states includes at least one of:
first DL and UL TCI states;
a first DL TCI state;
a first UL TCI state; or
none.

In an embodiment, the first set of TCI states includes at least one of:
first DL and UL TCI states;
a first DL or UL TCI state; or
none.

In an embodiment, the first set of TCI states includes at least one of:
a first joint TCI state; or
none.

In an embodiment, the first parameter includes 2 or bits.

In an embodiment, the TCI state activation command contains a second parameter, and the second parameter corresponds to the second set of TCI states.

In an embodiment, in the TCI state activation command, the first set of TCI states is before the second set of TCI states.

In an embodiment, the second set of TCI states includes at least one of:
second DL and UL TCI states;
a second DL TCI state;
a second UL TCI state; or
none.

In an embodiment, the second set of TCI states includes at least one of:
second DL and UL TCI states;
a second DL or UL TCI state; or
none.

In an embodiment, the second set of TCI states includes at least one of:
a second joint TCI state; or
none.

In an embodiment, the second parameter includes 2 or more bits.

In an embodiment, the sequence number of a TCI state jointly indicated by the first parameter and the second parameter corresponds to a codepoint indicating a TCI state in physical layer signaling.

In one embodiment, the TCI state activation command contains a third parameter, and the third parameter corresponds to a combination of the first set of TCI states and the second set of TCI states.

In one embodiment, the combination of the first set of TCI states and the second set of TCI states includes at least one of:
first DL and UL TCI states and second DL and UL TCI states;
the first DL and UL TCI states and a second DL or UL TCI state;
the first DL and UL TCI states;
a first DL or UL TCI state and the second DL and UL TCI states;
the first DL or UL TCI state and the second DL or UL TCI state;
the first DL or UL TCI state;
the second DL and UL TCI states; or
the second DL or UL TCI state.

In one embodiment, the third parameter includes 3 or more bits.

In one embodiment, the sequence number of a TCI state indicated by the third parameter corresponds to a codepoint indicating a TCI state in physical layer signaling.

In one embodiment, the TCI state activation command contains a fourth parameter, and the fourth parameter corresponds to multiple sets of joint TCI states.

In one embodiment, the multiple sets of joint TCI states include at least one of:
a first joint TCI state and a second joint TCI state;
the first joint TCI State; or
the second joint TCI state.

In one embodiment, the fourth parameter includes 2 or more bits.

In one embodiment, the joint TCI state represents that a TCI state includes a UL TCI state and a DL TCI state.

In one embodiment, the sequence number of a TCI state indicated by the fourth parameter corresponds to a TCI codepoint indicating a TCI state in physical layer signaling.

In one embodiment, the DL and UL TCI states include a DL TCI state and a UL TCI state.

In one embodiment, the DL or UL TCI state includes a DL TCI state or a UL TCI state.

In one embodiment, the TCI state activation command contains a fifth parameter, and the fifth parameter indicates UL or DL.

In one embodiment, the TCI state activation command is carried in a MAC CE sent by a second communication device, the first communication device is a terminal device, and the second communication device is a network device.

The first communication device 900 of the embodiments of the present disclosure can implement the corresponding functions of the first communication device in the embodiments of the aforementioned communication method 300. For the processes, functions, implementation methods, and beneficial effects corresponding to each module (sub-module, unit or component, etc.) in the first communication device 900, reference can be made to the corresponding illustration in the above method embodiments, which will not be repeated here. It may be noted that, the functions of each module (sub-module, unit, or component, etc.) in the first communication device 900 of the embodiments of the present disclosure can be implemented by different modules (sub-modules, units, or components, etc.) or by the same module (sub-module, unit, or component, etc.).

FIG. 10 is a schematic block diagram of a second communication device 1000 according to an embodiment of the present disclosure. The second communication device 1000 includes a sending unit 1001 configured to send a TCI state activation command, where the TCI state activation command indicates multiple sets of TCI states.

In one embodiment, there is a corresponding relationship between TRPs and TCI states, and the multiple sets of TCI states include unified TCI states of multiple TRPs.

In one embodiment, the multiple sets of TCI states include a first set of TCI states and a second set of TCI states.

In one embodiment, the TCI state activation command contains a first parameter, and the first parameter corresponds to the first set of TCI states.

In one embodiment, the first set of TCI states includes at least one of:
first DL and UL TCI states;
a first DL TCI state;
a first UL TCI state; or
none.

In one embodiment, the first set of TCI states includes at least one of:
first DL and UL TCI states;
a first DL or UL TCI state; or
none.

In one embodiment, the first set of TCI states includes at least one of:
a first joint TCI state; or
none.

In one embodiment, the first parameter includes 2 or more bits.

In one embodiment, the TCI state activation command contains a second parameter, and the second parameter corresponds to the second set of TCI states.

In one embodiment, in the TCI state activation command, the first set of TCI states is before the second set of TCI states.

In one embodiment, the second set of TCI states includes at least one of:
second DL and UL TCI states;
a second DL TCI state;
a second UL TCI state; or
none.

In one embodiment, the second set of TCI states includes at least one of:
second DL and UL TCI states;
a second DL or UL TCI state; or
none.

In one embodiment, the second set of TCI states includes at least one of:
a second joint TCI state; or
none.

In one embodiment, the second parameter includes 2 or more bits.

In one embodiment, the sequence number of a TCI state jointly indicated by the first parameter and the second parameter corresponds to a codepoint indicating a TCI state in physical layer signaling.

In one embodiment, the TCI state activation command contains a third parameter, and the third parameter corresponds to a combination of the first set of TCI states and the second set of TCI states.

In one embodiment, the combination of the first set of TCI states and the second set of TCI states includes at least one of:
first DL and UL TCI states and second DL and UL TCI states;
the first DL and UL TCI states and a second DL or UL TCI state;
the first DL and UL TCI states;
a first DL or UL TCI state and the second DL and UL TCI states;
the first DL or UL TCI state and the second DL or UL TCI state;
the first DL or UL TCI state;
the second DL and UL TCI state; or
the second DL or UL TCI state.

In one embodiment, the third parameter includes 3 or more bits.

In one embodiment, the sequence number of a TCI state indicated by the third parameter corresponds to a codepoint indicating a TCI state in physical layer signaling.

In one embodiment, the TCI state activation command contains a fourth parameter, and the fourth parameter corresponds to multiple sets of joint TCI states.

In one embodiment, the multiple sets of joint TCI states include at least one of:
a first joint TCI state and a second joint TCI state;
the first joint TCI State; or
the second joint TCI state.

In one embodiment, the fourth parameter includes 2 or more bits.

In one embodiment, the joint TCI state represents that a TCI state includes a UL TCI state and a DL TCI state.

In one embodiment, the sequence number of a TCI state indicated by the fourth parameter corresponds to a TCI codepoint indicating a TCI state in physical layer signaling.

In one embodiment, the DL and UL TCI states include a DL TCI state and a UL TCI state.

In one embodiment, the DL or UL TCI state includes a DL TCI state or a UL TCI state.

In one embodiment, the TCI state activation command contains a fifth parameter, and the fifth parameter indicates UL or DL.

In one embodiment, the TCI state activation command is carried in a MAC CE sent by a second communication device, the first communication device is a terminal device, and the second communication device is a network device.

The second communication device 1000 of the embodiment of the present disclosure can implement the corresponding functions of the second communication device in the embodiments of the aforementioned communication method 400. For the processes, functions, implementation methods, and beneficial effects corresponding to each module (sub-module, unit, or component, etc.) in the second communication device 1000, reference can be made to the corresponding illustration in the above method embodiments, which will not be repeated here. It may be noted that, the functions of each module (sub-module, unit, or component, etc.) in the second communication device 1000 of the embodiment of the present disclosure can be implemented by different modules (sub-modules, units, or components, etc.) or by the same module (sub-module, unit, or component, etc.).

FIG. 11 is a schematic structural diagram of a communication device 1100 according to embodiments of the present disclosure. The communication device 1100 includes a processor 1110, and the processor 1110 can call and run a computer program in a memory to enable the communication device 1100 to implement the method in the embodiments of the present disclosure.

In one embodiment, the communication device 1100 may further include a memory 1120. The processor 1110 may call and run a computer program in the memory 1120 to enable the communication device 1100 to implement the method in the embodiments of the present disclosure. The memory 1120 may be a separate device independent of the processor 1110, or may be integrated into the processor 1110.

In one embodiment, the communication device 1100 may further include a transceiver 1130, and the processor 1110 may control the transceiver 1130 to communicate with other devices, specifically, may send information or data to other devices, or receive information or data sent by other devices.

The transceiver 1130 may include a transmitter and a receiver. The transceiver 1130 may further include an antenna, and there may be one or more antennas.

In one embodiment, the communication device 1100 may be the first communication device of the embodiments of the present disclosure, and the communication device 1100 may implement the corresponding processes implemented by the first communication device in each method of the embodiments of the present disclosure, which will not be repeated here for the sake of brevity.

In one embodiment, the communication device 1100 may be the second communication device of the embodiments of the present disclosure, and the communication device 1100 may implement the corresponding processes implemented by the second communication device in each method of the embodiments of the present disclosure, which will not be repeated here for the sake of brevity.

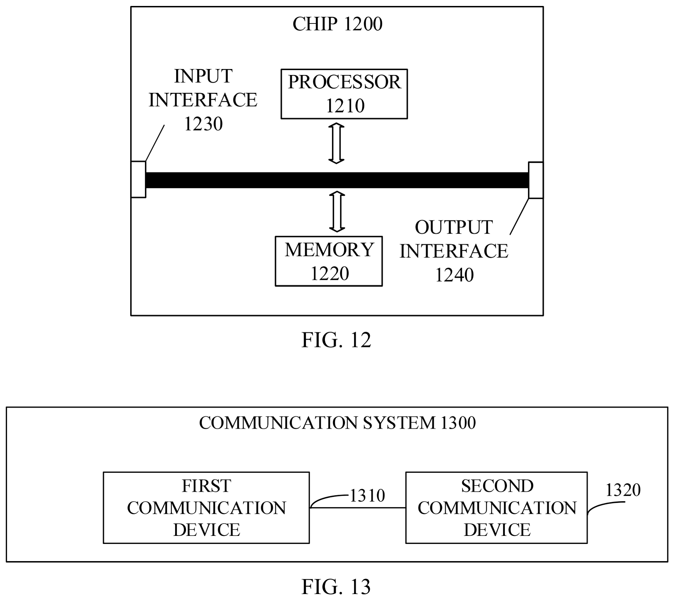

FIG. 12 is a schematic structural diagram of a chip 1200 according to embodiments of the present disclosure. The chip 1200 includes a processor 1210, and the processor 1210 can call and run a computer program in a memory to implement the method in the embodiments of the present disclosure.

In one embodiment, the chip 1200 may further include a memory 1220. The processor 1210 may call and run a computer program in the memory 1220 to implement the method executed by the first communication device or the second communication device in the embodiments of the present disclosure. The memory 1220 may be a separate device independent of the processor 1210, or may be integrated into the processor 1210.

In one embodiment, the chip 1200 may further include an input interface 1230. The processor 1210 may control the input interface 1230 to communicate with other devices or chips, and specifically, may obtain information or data sent by other devices or chips.

In one embodiment, the chip 1200 may further include an output interface 1240. The processor 1210 may control the output interface 1240 to communicate with other devices or chips, and specifically, may output information or data to other devices or chips.

In one embodiment, the chip can be applied to the first communication device in the embodiments of the present disclosure, and the chip can implement the corresponding processes implemented by the first communication device in each method of the embodiments of the present disclosure, which will not be repeated here for the sake of brevity.

In one embodiment, the chip can be applied to the second communication device in the embodiments of the present disclosure, and the chip can implement the corresponding processes implemented by the second communication device in each method of the embodiments of the present disclosure, which will not be repeated herein for the sake of brevity.

The chip applied to the first communication device and the second communication device may be the same chip or different chips.

It may be understood that, the chip mentioned in the embodiments of the present disclosure can also be called a system-level chip, a system chip, a chip system, or a system-on-chip, etc.

The processor mentioned above may be a general-purpose processor, a digital signal processor (DSP), a field programmable gate array (FPGA), an application specific integrated circuit (ASIC) or other programmable logic devices, a transistor logic device, a discrete hardware component, etc. The general-purpose processor mentioned above may be a microprocessor or any conventional processor, etc.

The memory mentioned above may be a volatile memory or a non-volatile memory, or may include both volatile and non-volatile memories. The non-volatile memory may be a read-only memory (ROM), a programmable ROM (PROM), an erasable programmable read-only memory (EPROM), an electrically erasable programmable read-only memory (EEPROM), or a flash memory. The volatile memory may be a random access memory (RAM).

It may be understood that, the above-mentioned memory is exemplary but not restrictive. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), etc. That is to say, the memory in the embodiments of the present disclosure is intended to include but not limited to these and any other suitable types of memory.

FIG. 13 is a schematic block diagram of a communication system 1300 according to embodiments of the present disclosure. The communication system 1300 includes a first communication device 1310 and a second communication device 1320. The first communication device 1310 is configured to receive a TCI state activation command, where the TCI state activation command indicates one or more sets of TCI states. The second communication device 1320 is configured to send the TCI state activation command.

The first communication device 1310 may be configured to implement the corresponding functions implemented by the first communication device, such as the terminal device, in the above method, and the second communication device 1320 may be configured to implement the corresponding functions implemented by the second communication device, such as the network device, in the above method, which will not be repeated here for the sake of brevity.

The above embodiments can be implemented in whole or in part by software, hardware, firmware or any combination thereof. When implemented using software, the embodiments can be implemented in whole or in part in the form of a computer program product. The computer program product includes one or more computer instructions. When the computer program instructions are loaded and executed on a computer, the processes or functions of the embodiments of the present disclosure are generated in whole or in part. The computer may be a general-purpose computer, a special-purpose computer, a computer network, or other programmable devices. The computer instructions may be stored in a computer-readable storage medium, or transmitted from one computer-readable storage medium to another computer-readable storage medium. For example, the computer instructions can be transmitted from a website site, computer, server or data center by a wired (e.g., coaxial cable, optical fiber, digital subscriber line (DSL)) or wireless (e.g., infrared, wireless, microwave, etc.) mode to another website site, computer, server or data center. The computer-readable storage medium may be any available medium that a computer can access or a data storage device such as a server or data center that integrates one or more available media. The available medium may be a magnetic medium (e.g., a floppy disk, a hard disk, a magnetic tape), an optical medium (e.g., a digital video disk (DVD)), or a semiconductor medium (e.g., a solid state disk (SSD)).

It may be understood that, in the various embodiments of the present disclosure, the magnitude of the serial numbers of the above-mentioned processes does not mean the order of execution. The order of execution of each process should be determined by its function and internal logic, and should not constitute any limitation on the implementation process of the embodiments of the present disclosure.

Those skilled in the art can clearly understand that, for the convenience and brevity of illustration, for the specific operation processes of the systems, devices, and units described above, reference can be made to the corresponding processes in the aforementioned method embodiments, which will not be repeated here.

The above is only specific implementations of the present disclosure, but the protection scope of the present disclosure is not limited thereto. Any person skilled in the art who is familiar with the present technical field can easily think of changes or substitutions within the technical scope disclosed in the present disclosure, which should be included in the protection scope of the present disclosure. Therefore, the protection scope of the present disclosure should be based on the protection scope of the claims.

## Claims

1. A communication method, comprising:
receiving, by a first communication device, a transmission configuration indicator (TCI) state activation command, wherein the TCI state activation command indicates a set of TCI states or a plurality of sets of TCI states.

2. The method of claim 1, wherein there is a corresponding relationship between transmission and reception points (TRPs) and TCI states, and the plurality of sets of TCI states comprise unified TCI states of a plurality of TRPs.

3. The method of claim 1 or 2, wherein the plurality of sets of TCI states comprise a first set of TCI states and a second set of TCI states.

4. The method of any one of claims 1 to 3, wherein the TCI state activation command contains a first parameter, wherein the first parameter corresponds to a first set of TCI states.

5. The method of claim 4, wherein the first set of TCI states comprises at least one of:
first downlink (DL) and uplink (UL) TCI states;
a first DL TCI state;
a first UL TCI state; or
none.

6. The method of claim 4, wherein the first set of TCI states comprises at least one of:
first DL and UL TCI states;
a first DL or UL TCI state; or
none.

7. The method of claim 4, wherein the first set of TCI states comprises at least one of:
a first joint TCI state; or
none.

8. The method of any one of claims 4 to 7, wherein the first parameter comprises 2 or more bits.

9. The method of any one of claims 4 to 8, wherein the TCI state activation command comprises a second parameter, wherein the second parameter corresponds to a second set of TCI states.

10. The method of claim 9, wherein in the TCI state activation command, the first set of TCI states is before the second set of TCI states.

11. The method of claim 9 or 10, wherein the second set of TCI states comprises at least one of:
second DL and UL TCI states;
a second DL TCI state;
a second UL TCI state; or
none.

12. The method of claim 9 or 10, wherein the second set of TCI states comprises at least one of:
second DL and UL TCI states;
a second DL or UL TCI state; or
none.

13. The method of claim 9 or 10, wherein the second set of TCI states comprises at least one of:
a second joint TCI state; or
none.

14. The method of any one of claims 9 to 13, wherein the second parameter comprises 2 or more bits.

15. The method of any one of claims 9 to 14, wherein a sequence number of a TCI state jointly indicated by the first parameter and the second parameter corresponds to a codepoint indicating a TCI state in physical layer signaling.

16. The method of any one of claims 1 to 3, wherein the TCI state activation command contains a third parameter, wherein the third parameter corresponds to a combination of a first set of TCI states and a second set of TCI states.

17. The method of claim 16, wherein the combination of the first set of TCI states and the second set of TCI states comprises at least one of:
first DL and UL TCI states and second DL and UL TCI states;
the first DL and UL TCI states and a second DL or UL TCI state;
the first DL and UL TCI states;
a first DL or UL TCI state and the second DL and UL TCI states;
the first DL or UL TCI state and the second DL or UL TCI state;
the first DL or UL TCI state;
the second DL and UL TCI states; or
the second DL or UL TCI state.

18. The method of claim 16 or 17, wherein the third parameter comprises 3 or more bits.

19. The method of any one of claims 16 to 18, wherein a sequence number of a TCI state indicated by the third parameter corresponds to a codepoint indicating a TCI state in physical layer signaling.

20. The method of any one of claims 1 to 3, wherein the TCI state activation command contains a fourth parameter, wherein the fourth parameter corresponds to a plurality of sets of joint TCI states.

21. The method of claim 20, wherein the plurality of sets of joint TCI states comprise at least one of:
a first joint TCI state and a second joint TCI state;
the first joint TCI state; or
the second joint TCI state.

22. The method of claim 20 or 21, wherein the fourth parameter comprises 2 or more bits.

23. The method of any one of claims 20 to 22, wherein the joint TCI state represents that a TCI state comprises a UL TCI state and a DL TCI state.

24. The method of any one of claims 20 to 23, wherein a sequence number of a TCI state indicated by the fourth parameter corresponds to a TCI codepoint indicating a TCI state in physical layer signaling.

25. The method of claim 5, 6, 11, 12 or 17, wherein the DL and UL TCI states comprise a DL TCI state and a UL TCI state.

26. The method of claim 6, 12 or 17, wherein the DL or UL TCI state comprises a DL TCI state or a UL TCI state.

27. The method of any one of claims 1 to 26, wherein the TCI state activation command contains a fifth parameter, wherein the fifth parameter indicates UL or DL.

28. The method of any one of claims 1 to 27, wherein the TCI state activation command is carried in a medium access control control element (MAC CE) sent by a second communication device, wherein the first communication device is a terminal device, and the second communication device is a network device.

29. A communication method, comprising:
sending, by a second communication device, a transmission configuration indicator (TCI) state activation command, wherein the TCI state activation command indicates a plurality of TCI states.

30. The method of claim 29, wherein there is a corresponding relationship between transmission and reception points (TRPs) and TCI states, and the plurality of sets of TCI states comprise unified TCI states of a plurality of TRPs.

31. The method of claim 29 or 30, wherein the plurality of sets of TCI states comprise a first set of TCI states and a second set of TCI states.

32. The method of any one of claims 29 to 31, wherein the TCI state activation command contains a first parameter, wherein the first parameter corresponds to a first set of TCI states.

33. The method of claim 32, wherein the first set of TCI states comprises at least one of:
first downlink (DL) and uplink (UL) TCI states;
a first DL TCI state;
a first UL TCI state; or
none.

34. The method of claim 32, wherein the first set of TCI states comprises at least one of:
first DL and UL TCI states;
a first DL or UL TCI state; or
none.

35. The method of claim 32, wherein the first set of TCI states comprises at least one of:
a first joint TCI state; or
none.

36. The method of any one of claims 32 to 35, wherein the first parameter comprises 2 or more bits.

37. The method of any one of claims 32 to 36, wherein the TCI state activation command contains a second parameter, wherein the second parameter corresponds to a second set of TCI states.

38. The method of claim 37, wherein in the TCI state activation command, the first set of TCI states is before the second set of TCI states.

39. The method of claim 37 or 38, wherein the second set of TCI states comprises at least one of:
second DL and UL TCI states;
a second DL TCI state;
a second UL TCI state; or
none.

40. The method of claim 37 or 38, wherein the second set of TCI states comprises at least one of:
second DL and UL TCI states;
a second DL or UL TCI state; or
none.

41. The method of claim 37 or 38, wherein the second set of TCI states comprises at least one of:
a second joint TCI state; or
none.

42. The method of any one of claims 37 to 41, wherein the second parameter comprises 2 or more bits.

43. The method of any one of claims 37 to 42, wherein a sequence number of a TCI state jointly indicated by the first parameter and the second parameter corresponds to a codepoint indicating a TCI state in physical layer signaling.

44. The method of any one of claims 29 to 31, wherein the TCI state activation command contains a third parameter, wherein the third parameter corresponds to a combination of a first set of TCI states and a second set of TCI states.

45. The method of claim 44, wherein the combination of the first set of TCI states and the second set of TCI states comprises at least one of:
first DL and UL TCI states and second DL and UL TCI states;
the first DL and UL TCI states and a second DL or UL TCI state;
the first DL and UL TCI states;
a first DL or UL TCI state and the second DL and UL TCI states;
the first DL or UL TCI state and the second DL or UL TCI state;
the first DL or UL TCI state;
the second DL and UL TCI states; or
the second DL or UL TCI state.

46. The method of claim 44 or 45, wherein the third parameter comprises 3 or more bits.

47. The method of any one of claims 44 to 46, wherein a sequence number of a TCI state indicated by the third parameter corresponds to a codepoint indicating a TCI state in physical layer signaling.

48. The method of any one of claims 29 to 31, wherein the TCI state activation command contains a fourth parameter, wherein the fourth parameter corresponds to a plurality of sets of joint TCI states.

49. The method of claim 48, wherein the plurality of sets of joint TCI states comprise at least one of:
a first joint TCI state and a second joint TCI state;
the first joint TCI state; or
the second joint TCI state.

50. The method of claim 48 or 49, wherein the fourth parameter comprises 2 or more bits.

51. The method of any one of claims 48 to 50, wherein the joint TCI state represents that a TCI state comprises a UL TCI state and a DL TCI state.

52. The method of any one of claims 48 to 51, wherein a sequence number of a TCI state indicated by the fourth parameter corresponds to a TCI codepoint indicating a TCI state in physical layer signaling.

53. The method of claim 33, 34, 39, 40 or 45, wherein the DL and UL TCI states comprise a DL TCI state and a UL TCI state.

54. The method of claim 34, 40 or 45, wherein the DL or UL TCI state comprises a DL TCI state or a UL TCI state.

55. The method of any one of claims 29 to 54, wherein the TCI state activation command contains a fifth parameter, wherein the fifth parameter indicates UL or DL.

56. The method of any one of claims 29 to 55, wherein the TCI state activation command is carried in a medium access control control element (MAC CE) sent by a second communication device, wherein the first communication device is a terminal device, and the second communication device is a network device.

57. A first communication device, comprising:
a receiving unit configured to receive a transmission configuration indicator (TCI) state activation command, wherein the TCI state activation command indicates a set of TCT states or a plurality of sets of TCI states.

58. The first communication device of claim 57, wherein there is a corresponding relationship between transmission and reception points (TRPs) and TCI states, and the plurality of sets of TCI states comprise unified TCI states of a plurality of TRPs.

59. The first communication device of claim 57 or 58, wherein the plurality of sets of TCI states comprise a first set of TCI states and a second set of TCI states.

60. The first communication device of any one of claims 57 to 59, wherein the TCI state activation command contains a first parameter, wherein the first parameter corresponds to a first set of TCI states.

61. The first communication device of claim 60, wherein the first set of TCI states comprises at least one of:
first DL and UL TCI states;
a first DL TCI state;
a first UL TCI state; or
none.

62. The first communication device of claim 60, wherein the first set of TCI states comprises at least one of:
first DL and UL TCI states;
a first DL or UL TCI state; or
none.

63. The first communication device of claim 60, wherein the first set of TCI states comprises at least one of:
a first joint TCI state; or
none.

64. The first communication device of any one of claims 60 to 63, wherein the first parameter comprises 2 or more bits.

65. The first communication device of any one of claims 60 to 64, wherein the TCI state activation command contains a second parameter, wherein the second parameter corresponds to a second set of TCI states.

66. The first communication device of claim 65, wherein in the TCI state activation command, the first set of TCI states is before the second set of TCI states.

67. The first communication device of claim 65 or 66, wherein the second set of TCI states comprises at least one of:
second DL and UL TCI states;
a second DL TCI state;
a second UL TCI state; or
none.

68. The first communication device of claim 65 or 66, wherein the second set of TCI states comprises at least one of:
second DL and UL TCI states;
a second DL or UL TCI state; or
none.

69. The first communication device of claim 65 or 66, wherein the second set of TCI states comprises at least one of:
a second joint TCI state; or
none.

70. The first communication device of any one of claims 65 to 69, wherein the second parameter comprises 2 or more bits.

71. The first communication device of any one of claims 64 to 70, wherein a sequence number of a TCI state jointly indicated by the first parameter and the second parameter corresponds to a codepoint indicating a TCI state in physical layer signaling.

72. The first communication device of any one of claims 57 to 59, wherein the TCI state activation command contains a third parameter, wherein the third parameter corresponds to a combination of a first set of TCI states and a second set of TCI states.

73. The first communication device of claim 72, wherein the combination of the first set of TCI states and the second set of TCI states comprises at least one of:
first DL and UL TCI states and second DL and UL TCI states;
the first DL and UL TCI states and a second DL or UL TCI state;
the first DL and UL TCI state;
a first DL or UL TCI state and the second DL and UL TCI state;
the first DL or UL TCI state and the second DL or UL TCI state;
the first DL or UL TCI state;
the second DL and UL TCI state; or
the second DL or UL TCI state.

74. The first communication device of claim 72 or 73, wherein the third parameter comprises 3 or more bits.

75. The first communication device of any one of claims 72 to 74, wherein a sequence number of a TCI state indicated by the third parameter corresponds to a codepoint indicating a TCI state in physical layer signaling.

76. The first communication device of any one of claims 57 to 59, wherein the TCI state activation command contains a fourth parameter, wherein the fourth parameter corresponds to a plurality of sets of joint TCI states.

77. The first communication device of claim 76, wherein the plurality of sets of joint TCI states comprises at least one of:
a first joint TCI state and a second joint TCI state;
the first joint TCI state; or
the second joint TCI state.

78. The first communication device of claim 76 or 77, wherein the fourth parameter comprises 2 or more bits.

79. The first communication device of any one of claims 76 to 78, wherein the joint TCI state represents that a TCI state comprises a UL TCI state and a DL TCI state.

80. The first communication device of any one of claims 76 to 79, wherein a sequence number of a TCI state indicated by the fourth parameter corresponds to a TCI codepoint indicating a TCI state in physical layer signaling.

81. The first communication device of claim 61, 62, 67, 68 or 73, wherein the DL and UL TCI states comprise a DL TCI state and a UL TCI state.

82. The first communication device of claim 62, 68 or 73, wherein the DL or UL TCI state comprises a DL TCI state or a UL TCI state.

83. The first communication device of any one of claims 57 to 82, wherein the TCI state activation command contains a fifth parameter, wherein the fifth parameter indicates UL or DL.

84. The first communication device of any one of claims 57 to 83, wherein the TCI state activation command is carried in a medium access control control element (MAC CE) sent by a second communication device, wherein the first communication device is a terminal device, and the second communication device is a network device.

85. A second communication device, comprising:
a sending unit configured to send a transmission configuration indicator (TCI) state activation command, wherein the TCI state activation command indicates a plurality of sets of TCI states.

86. The second communication device of claim 85, wherein there is a corresponding relationship between transmission and reception points (TRPs) and TCI states, and the plurality of sets of TCI states comprise unified TCI states of a plurality of TRPs.

87. The second communication device of claim 85 or 86, wherein the plurality of sets of TCI states comprise a first set of TCI states and a second set of TCI states.

88. The second communication device of any one of claims 85 to 86, wherein the TCI state activation command contains a first parameter, wherein the first parameter corresponds to a first set of TCI states.

89. The second communication device of claim 88, wherein the first set of TCI states comprises at least one of:
first downlink (DL) and uplink (UL) TCI states;
a first DL TCI state;
a first UL TCI state; or
none.

90. The second communication device of claim 88, wherein the first set of TCI states comprises at least one of:
first DL and UL TCI states;
a first DL or UL TCI state;
none.

91. The second communication device of claim 88, wherein the first set of TCI states comprises at least one of:
a first joint TCI state; or
none.

92. The second communication device of any one of claims 88 to 91, wherein the first parameter comprises 2 or more bits.

93. The second communication device of any one of claims 88 to 92, wherein the TCI state activation command contains a second parameter, wherein the second parameter corresponds to a second set of TCI states.

94. The second communication device of claim 93, wherein in the TCI state activation command, the first set of TCI states is before the second set of TCI states.

95. The second communication device of claim 93 or 94, wherein the second set of TCI states comprises at least one of:
second DL and UL TCI states;
a second DL TCI state;
a second UL TCI state; or
none.

96. The second communication device of claim 93 or 94, wherein the second set of TCI states comprises at least one of:
second DL and UL TCI states;
a second DL or UL TCI state; or
none.

97. The second communication device of claim 93 or 94, wherein the second set of TCI states comprises at least one of:
a second joint TCI state; or
none.

98. The second communication device of any one of claims 93 to 97, wherein the second parameter comprises 2 or more bits.

99. The second communication device of any one of claims 93 to 98, wherein a sequence number of a TCI state jointly indicated by the first parameter and the second parameter corresponds to a codepoint indicating a TCI state in physical layer signaling.

100. The second communication device of any one of claims 85 to 87, wherein the TCI state activation command contains a third parameter, wherein the third parameter corresponds to a combination of a first set of TCI states and a second set of TCI states.

101. The second communication device of claim 100, wherein the combination of the first set of TCI states and the second set of TCI states comprises at least one of:
first DL and UL TCI states and second DL and UL TCI states;
the first DL and UL TCI states and a second DL or UL TCI state;
the first DL and UL TCI states;
a first DL or UL TCI state and the second DL and UL TCI state;
the first DL or UL TCI state and the second DL or UL TCI state;
the first DL or UL TCI state;
the second DL and UL TCI state; or
the second DL or UL TCI state.

102. The second communication device of claim 100 or 101, wherein the third parameter comprises 3 or more bits.

103. The second communication device of any one of claims 100 to 102, wherein a sequence number of a TCI state indicated by the third parameter corresponds to a codepoint indicating a TCI state in physical layer signaling.

104. The second communication device of any one of claims 85 to 87, wherein the TCI state activation command contains a fourth parameter, wherein the fourth parameter corresponds to a plurality of sets of joint TCI states.

105. The second communication device of claim 104, wherein the plurality of sets of joint TCI states comprise at least one of:
a first joint TCI state and a second joint TCI state;
the first joint TCI state; or
the second joint TCI state.

106. The second communication device of claim 104 or 105, wherein the fourth parameter comprises 2 or more bits.

107. The second communication device of any one of claims 104 to 106, wherein the joint TCI state represents that a TCI state comprises a UL TCI state and a DL TCI state.

108. The second communication device of any one of claims 104 to 107, wherein a sequence number of a TCI state indicated by the fourth parameter corresponds to a TCI codepoint indicating a TCI state in physical layer signaling.

109. The second communication device of claim 89, 90, 95, 96 or 101, wherein the DL and UL TCI states comprise a DL TCI state and a UL TCI state.

110. The second communication device of claim 90, 96 or 101, wherein the DL or UL TCI state comprises a DL TCI state or a UL TCI state.

111. The second communication device of any one of claims 85 to 110, wherein the TCI state activation command contains a fifth parameter, wherein the fifth parameter indicates UL or DL.

112. The second communication device of any one of claims 85 to 111, wherein the TCI state activation command is carried in a medium access control control element (MAC CE) sent by the second communication device, wherein the first communication device is a terminal device, and the second communication device is a network device.

113. A first communication device, comprising:
a processor; and
a memory configured to store a computer program;
the processor being configured to call and run the computer program stored in the memory, to enable the first communication device to execute the method of any one of claims 1 to 28.

114. A second communication device, comprising:
a processor; and
a memory configured to store a computer program;
the processor being configured to call and run the computer program stored in the memory, to enable the second communication device to execute the method of any one of claims 29 to 56.

115. A chip, comprising:
a processor configured to call and run a computer program in a memory, to enable a device equipped with the chip to execute the method of any one of claims 1 to 28 or any one of claims 29 to 56.

116. A computer-readable storage medium configured to store a computer program which, when executed by a device, causes the device to perform the method of any one of claims 1 to 28 or any one of claims 29 to 56.

117. A computer program product comprising computer program instructions for causing a computer to perform the method of any one of claims 1 to 28 or any one of claims 29 to 56.

118. A computer program causing a computer to perform the method of any one of claims 1 to 28 or any one of claims 29 to 56.
